# EUROPEAN PATENT SPECIFICATION

(11) **EP 3 094 425 B1**
(45) Date of publication and mention of the grant of the patent: **20.06.2018**
(21) Application number: 15707780.1
(22) Date of filing: 16.01.2015
(51) Int. Cl.: B21B 1/46, B21B 13/22

(54) **PLANT AND METHOD FOR THE PRODUCTION OF METAL PRODUCTS**
ANLAGE UND VERFAHREN ZUR PRODUKTION VON METALLPRODUKTEN
DISPOSITIF ET PROCÉDÉ POUR LA PRODUCTION DE PRODUITS MÉTALLIQUES

(30) Priority: 17.01.2014 IT UD20140009
(43) Date of publication of application: 23.11.2016
(73) Proprietor: Danieli & C. Officine Meccaniche, S.p.A., 33042 Buttrio (IT)
(72) Inventor: BENEDETTI, Gianpietro, I-33019 Tricesimo (IT); BOBIG, Paolo, I-34075 San Canzian d'Isonzo (IT)
(74) Representative: Petraz, Davide Luigi
(86) International application number: PCT/IB2015/050328
(87) International publication number: WO 2015/107483

(56) References cited:
- EP-A1- 2 174 728
- WO-A1-2007/073841
- WO-A1-2013/046346
- DE-A1-102005 011 254

## Description

### FIELD OF THE INVENTION

The present invention concerns a plant for the production of metal products and the corresponding method, see e.g. document WO 2013/046346 A1. In particular, the plant for the production of metal products is suitable to produce metal products starting from slabs and comprises at least one casting line and at least one rolling line located downstream of and continuous with the casting line.

The present invention also concerns a method for the production of metal products in a plant of the type identified above.

### BACKGROUND OF THE INVENTION

Plants for the production of metal products are known, comprising a casting line for thin slabs and a rolling line located downstream of and aligned with the casting line.

Downstream of the casting line there is normally a furnace to heat and/or maintain the thin slabs at a determinate temperature before they are rolled.

The rolling line is provided with a plurality of rolling units disposed in sequence and in which the thin slab is progressively reduced in thickness so as to obtain, for example, strip to be fed to a cooling line and finally to be wound in coils.

To increase the productivity of the plant, it has been proposed, for example in WO 2013/046346, to associate, parallel to the casting line for thin slabs, an auxiliary rolling line suitable to roll slabs of a conventional thickness, so-called medium or conventional slabs, arriving for example from a slab warehouse and to reduce their thickness by means of a reversible rolling stand until they are suitable to be fed to the main rolling line.

The auxiliary rolling line generally comprises its own heating furnace, located upstream of the reversible rolling stand, and provided to heat the conventional slabs before they are rolled.

A transfer unit, with parallel or pivoting conveyors, comprising for example shuttles, is provided to transfer the slabs, which after rolling in the reversible stand are ready for rolling, from the auxiliary rolling line to the heating furnace located downstream of casting.

The thin slabs in the heating furnace, arriving both from casting and from the auxiliary rolling line, are subsequently sent to the main rolling line.

Although it increases the efficiency and productivity of the plant, this solution does not allow to obtain, at the end of the production cycle, rolled products with dimensional qualities and mechanical properties that are uniform and constant over time.

Indeed, it is very difficult to guarantee homogenous temperatures for the thin slabs obtained by the auxiliary rolling line with the reversible stand.

During reversible rolling, the slab is subjected not only to a reduction in thickness but also a reduction in temperature, which varies between the head and tail: in particular, the rolled slab is colder at the tail end and hotter at the head end.

The thin slab thus obtained is then transferred to the heating furnace of the main line. The heating of the thin slab in the heating furnace can vary depending on the time it remains inside, but it is difficult to homogenize the temperature of the whole thin slab arriving from the auxiliary line.

Document DE 10 2005 011 254 shows a plant comprising a plurality of distinct rolling lines, selectively connectable to each other by transfer elements able to be translated linearly or inclined. In one of the lines, one of the furnaces can be equipped with an induction heating plant.

One purpose of the present invention is to obtain a plant for the production of metal products that allows to manage both thin slabs arriving from continuous casting and also thin slabs arriving from the off-line rolling of conventional slabs.

Another purpose of the present invention is to obtain finished rolled products with dimensional qualities and mechanical properties that are uniform and homogenous.

Another purpose of the present invention is to obtain a plant for the production of metal products with high productivity.

Another purpose is to perfect a method for the production of metal products with homogenous qualities starting both from continuous cast slabs and also from conventional slabs subjected to an off-line rolling pass.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, a plant for the production of metal products, according to the present invention, comprises:
- a main rolling line configured to roll thin slabs;
- a main casting line of thin slabs associated downstream to a heating and/or maintenance furnace to heat and/or maintain the cast thin slabs at a uniform temperature, the main casting line being positioned upstream of and aligned with the main rolling line, the main rolling line being configured to roll the thin slabs arriving at least from the heating and/or maintenance furnace;
- an auxiliary rolling line provided with at least one rolling unit configured to roll conventional slabs, taken from a slab warehouse for example, and obtain thin slabs to send for rolling, and with a transfer unit positioned downstream of the rolling unit and configured to transfer the thin slabs rolled by the latter to the heating and/or maintenance furnace.

In accordance with one feature of the present invention, the plant also comprises, a first induction heating unit interposed between the heating and/or maintenance furnace and the main rolling line and configured to heat the thin slabs arriving from the heating and/or maintenance furnace with a rapid heating system, before these are sent for rolling in the main rolling line.

The particular position and presence of the first induction heating unit allows to uniformly heat both the thin slabs arriving directly from the main casting line, and also those arriving from the rolling of conventional slabs, taken from a slab warehouse for example.

Using an induction heating unit, rather than traditional heating units, such as those usually used in heating and/or maintenance furnaces, allows to rapidly adjust the induction intensity and modes of the heat on the slab in transit, thus guaranteeing a homogenization of the temperature of all the thin slabs in transit.

This allows in particular to adjust the induction heating modes to the different nature of the thin slabs to be heated, whether they are arriving from the casting line or from the auxiliary rolling line which, as we said, produces slabs with a non-homogenous temperature between head and tail, which are colder, and the central part, which is hotter.

This heating action thus allows to obtain, from the main rolling line, rolled products from thin slabs with constant and uniform dimensional and mechanical qualities, irrespective of where they come from, whether directly from casting or from the slab warehouse.

In accordance with the invention, the first induction heating unit is configured to apply a first heating condition on the thin slabs arriving from the main casting line, and a second heating condition, different from the first, on the thin slabs arriving from the auxiliary rolling line.

According to some solutions of the present invention, the first heating condition provides a uniform heating action, that is, with a substantially constant temperature gradient, on the thin slabs arriving from the main casting line in order to raise their temperature uniformly over the entire length of the processed slab.

In accordance with other forms of embodiment, the second heating condition provides a differentiated heating action between the head, the center and the tail of the thin slabs arriving from the auxiliary rolling line, in order to homogenize their temperature along the longitudinal development.

Thanks to the possibility of carrying out a differentiated heating of the thin slabs by means of the first induction heating unit, it is possible to feed slabs with different properties to the main rolling line. Merely by way of example, not restrictive of the present invention, the main casting line can be fed with thin slabs made of carbon steels, and the auxiliary rolling line can be fed with thin slabs made of special micro-alloyed steels.

The particular positioning of the first heating unit and the possibility of modifying in a predetermined way the heating action on each slab in transit allows to increase the versatility of the plant; this also allows to roll materials with different alloy components and therefore with different mechanical properties.

Moreover, the use of an induction heating unit allows to satisfy quickly and substantially instantaneously the reductions in temperature that can occur in the heating and/or maintenance furnace due to any cause whatsoever. This also allows to obviate the high heat inertia of the heating and/or maintenance furnace, which necessitates a long period of time for example to raise the temperature inside the furnace.

In accordance with a possible form of embodiment, the auxiliary rolling line comprises a second induction heating unit interposed between the reversible rolling unit and the transfer unit, and configured to homogenize the temperature of the thin slabs rolled by the rolling unit, before they are transferred to the heating and/or maintenance furnace.

In accordance with a possible form of embodiment of the invention, the second induction heating unit is configured to apply on the thin slab a differentiated heating action along its longitudinal extension in order to homogenize the temperature thereof. Indeed, during the reversible rolling operation to which it is subjected before it is transferred to the heating and/or maintenance furnace, the conventional slab undergoes a reduction in temperature that is variable along the longitudinal extension of the slab.

The second induction heating unit allows to satisfy this lack of heat uniformity in order to supply to the heating and/or maintenance furnace a slab at a homogeneous temperature.

The second induction heating unit can be suitable to heat the rolled slabs to a temperature substantially equal to that of the thin slabs disposed in the heating and/or maintenance furnace and arriving from the main casting line.

In combination with this form of embodiment, the first induction heating unit can be configured to exert a uniform heating action on the slabs to raise their temperature uniformly along their longitudinal extension, wherever they come from.

In this way, the thin slabs fed from the heating and/or maintenance furnace can be conveniently heated to a temperature suitable for subsequent rolling in the main rolling line. The heating action exerted by the first induction heating unit allows the heating and/or maintenance furnace to work at a lower temperature than that provided in the absence of the first induction heating unit, with a consequent energy saving for heating the heating and/or maintenance furnace.

In accordance with another variant form of embodiment, the plant comprises a secondary casting line positioned substantially parallel to the main casting line. The secondary casting line comprises its own heating and/or maintenance furnace provided with at least one transfer module configured to transfer the thin slabs from the latter to the heating and/or maintenance furnace of the main casting line.

In this way it is possible to supply the main rolling line, located downstream, with thin slabs arriving directly from the main and/or secondary casting line or from the rolling line of conventional slabs.

This increases the flexibility of the plant, for example allowing one working line to be stopped for maintenance interventions and allowing the others to work.

### BRIEF DESCRIPTION OF THE DRAWINGS

These and other characteristics of the present invention will become apparent from the following description of some forms of embodiment, given as a non-restrictive example with reference to the attached drawings wherein:
- fig. 1 is a schematic representation of a first form of embodiment of a plant for the production of metal products according to the present invention;
- fig. 2 is a schematic representation of another form of embodiment of a plant for the production of metal products according to the present invention;

To facilitate comprehension, the same reference numbers have been used, where possible, to identify identical common elements in the drawings. It is understood that elements and characteristics of one form of embodiment can conveniently be incorporated into other forms of embodiment without further clarifications.

### DETAILED DESCRIPTION OF SOME FORMS OF EMBODIMENT

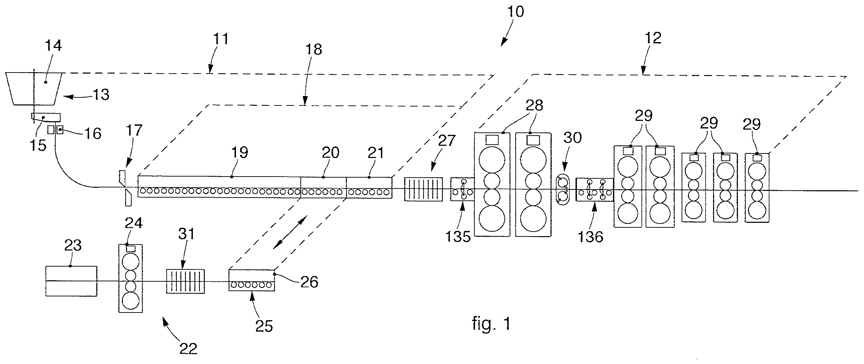

With reference to fig. 1, a plant for the production of metal products is indicated in its entirety by the reference number 10 and comprises at least one main casting line 11 of thin slabs and one main rolling line 12 located downstream and aligned to the main casting line 11.

The main casting line 11 comprises a casting machine 13 configured to cast the liquid metal arriving for example from a melting plant, not shown in the drawings.

As shown in fig. 1, the casting machine 13 can comprise a ladle 14, a tundish 15 and an ingot mold 16 in which the metal liquid is solidified to be sent for subsequent rolling.

In accordance with some forms of embodiment, the ingot mold 16 is the type suitable to cast thin slabs.

According to possible formulations of the present invention, a shearing device 17 is provided immediately downstream of the casting machine 13, such as pendulum shears, to shear the cast thin slabs to a pre-fixed length.

Downstream of the casting machine 13 a heating and/or maintenance furnace 18 is provided, also called tunnel furnace, in which the cast thin slabs are heated to and/or maintained at a uniform temperature for subsequent introduction into the main rolling line 12.

The heating and/or maintenance furnace 18 defines an accumulation store with which to manage possible down-times of the rolling process without particular repercussions on the casting which can thus continue to function for a certain time, also called "buffer-time". In this way the productivity of the melting plant which feeds the casting machine 13 is optimized.

The buffer capacity of the heating and/or maintenance furnace 18 allows not to interrupt the casting process at least during possible roll changes or during accidents, and therefore production does not have to be stopped. The buffer-time therefore increases the utilization factor of the plant and allows to make the casting process independent from the rolling process for even relatively long periods.

According to one solution of the invention, the heating and/or maintenance furnace 18 is configured to carry out a possible heating step in its first 50-60 minutes, while for the rest of the time it maintains only the temperature reached

According to another solution of the invention, the heating and/or maintenance furnace 18 is configured only to maintain the temperature reached. In particular, maintenance-only step is actuated every time the casting speed is high enough.

According to the present invention, the temperature of the slab exiting from the heating and/or maintenance furnace 18 can be comprised, merely by way of example, between 1050°C and 1180°C.

In accordance with the form of embodiment shown in fig. 1, the heating and/or maintenance furnace 18 can comprise a first module 19 suitable to accommodate the cast slabs directly from the casting machine 13, an intermediate module mobile laterally, with respect to its axis of longitudinal development, with the modalities and functions which will be described hereafter, and a final module 21 for the temporary storage of thin slabs before they are sent to the rolling line 12.

In accordance with some forms of embodiment of the present invention, the plant 10 also comprises an auxiliary rolling line 22 of thin slabs configured to feed the heating and/or maintenance furnace 18 with other thin slabs, as well as those obtained directly from the casting machine 13.

In possible forms of embodiment of the present invention, the auxiliary rolling line 22 is disposed substantially parallel to the main casting line 11.

In accordance with other forms of embodiment, the auxiliary rolling line 22 can be disposed transverse, for example substantially orthogonal, to the main longitudinal development of the main casting line 11.

According to one feature of the present invention, the auxiliary rolling line 22 is configured to roll conventional slabs, or with average thickness, hereafter referred to by the generic term of conventional slabs, to make them suitable for working in the main rolling line 12.

According to possible forms of embodiment, the auxiliary rolling line 22 comprises at least a heating furnace 23, configured to heat the conventional slabs to a temperature suitable for rolling. Merely by way of example, the conventional slabs can be heated to a temperature comprised between 1150°C and 1250°C.

The auxiliary rolling line 22 also comprises a rolling unit 24 provided to roll the conventional slabs and reduce them to sizes suitable to be processed by the main rolling line 12.

According to possible forms of embodiment, the rolling unit 24 can comprise at least a reversible roughing rolling stand.

In the rolling unit 24 the slab is subjected not only to a reduction in thickness but also a reduction in temperature which can vary between the head and tail of the rolled slab, for example colder at the tail end and hotter at the head end.

The auxiliary rolling line 22 can also comprise at least a transfer unit 25 located downstream of the rolling unit 24 and configured to transfer to the heating and/or maintenance furnace 18 the slabs rolled by the rolling unit 24.

According to possible forms of embodiment the transfer unit 25 is configured to transfer from the auxiliary rolling line 22 to the heating and/or maintenance furnace 18 the slabs previously rolled in the rolling unit 24.

In some forms of embodiment, the transfer unit 25 is configured to assume at least a first position, substantially aligned with the rolling unit 24, in which it receives the thin slabs rolled by the latter, and a second position, substantially aligned with the main casting line 11, in which it delivers the thin slabs to the heating and/or maintenance furnace 18.

The transfer unit 25 can comprise a shuttle 26, selectively translatable in a transverse direction with respect to the axis of the main casting line 11.

In possible formulations of the invention, the transfer unit 25 can be configured to deliver the previously rolled slabs to an intermediate zone of the heating and/or maintenance furnace 18. In one form of embodiment, it can be provided that the transfer unit 25 delivers the previously rolled slabs in correspondence with the intermediate module 20 of the heating and/or maintenance furnace 18.

In particular, in this case it can be provided that the intermediate module 20 comprises translation members, not shown in the drawings and provided to move the intermediate module 20 laterally and to allow the transfer unit 25 to align itself with the main casting line 11.

The last module 21 of the heating and/or maintenance furnace 18 can have the function of a store for the slabs, in the event of an interruption of the line for the same reasons as indicated above.

The thin slabs, ready for subsequent rolling in the main rolling line 12, are disposed in the last module 21 of the heating and/or maintenance furnace 18. In this way, even if the intermediate module 20 and the transfer unit 25 are in a condition of delivering the slab, the heating and/or maintenance furnace 18 with its last module 21 can send slabs for rolling.

The slabs exiting from the heating and/or maintenance furnace 18 can have a temperature comprised between 1050°C and 1180°C.

Merely by way of example, the slab exiting from the heating and/or maintenance furnace 18 can have a thickness comprised between 50mm and 110mm, preferably between 60mm and 85mm

According to a possible form of embodiment, the plant 10 according to the present invention can comprise a first induction heating unit 27 interposed between the main casting line 11 and the main rolling line 12. The first induction heating unit 27 can be located substantially aligned with the main casting line 11 and the main rolling line 12.

The first induction heating unit 27 is configured to heat the slabs arriving from the heating and/or maintenance furnace 18 whether they are arriving directly from the main casting line 11 or from the auxiliary rolling line 22.

According to possible formulations of the present invention, the first induction heating unit 27 can be configured to raise the temperature of the thin slab by a value comprised between 30°C and 80°C, preferably between 30°C and 60°C.

According to possible implementations of the invention, the slab is made to pass through the first induction heating unit 27 at a speed of transit comprised between 10m/min and 30m/min.

According to possible formulations of the present invention, the first induction heating unit 27 can be configured to heat the slab uniformly at head and tail. In this case the thin slab is subjected to a uniform raising of temperature along its whole longitudinal extension, in order to take the slab to a suitable temperature for subsequent working.

According to a variant, the first induction heating unit 27 can be configured to apply a first heating condition on the thin slabs arriving from the main casting line 11, and a second heating condition, different from the first, on the thin slabs arriving from the auxiliary rolling line 22.

It can be provided, for example, that in the first heating condition, a uniform heating action is applied on the thin slabs arriving from the main casting line 11 in order to raise the temperature thereof uniformly over the whole length of the slab processed. In the second heating condition, on the contrary, it is provided that the heating action is different between the head and tail of the thin slabs arriving from the auxiliary rolling line 22, in order to homogenize the temperature along their longitudinal development.

To this purpose, the first induction heating unit 27 can be provided with a plurality of heating modules controlled by suitable management and control means configured to manage the intensity of heating to be imparted on the thin slab that is made to transit depending on its provenance.

According to some solutions of the invention, the first induction heating unit 27 can be provided with detection means suitable to detect whether the thin slab is obtained directly from the main casting line 11 or whether it is obtained in the auxiliary rolling line 22.

Depending on the data detected by the detection means and the management and control means, it is possible to suitably vary the intensity and modalities of heating the thin slabs, depending on their provenance.

According to a possible form of embodiment, the auxiliary rolling line 22 comprises a second induction heating unit 31 interposed between the rolling unit 24 and the transfer unit 25 and configured to heat the thin slabs rolled in the rolling unit 24 to a temperature suitable for their subsequent introduction into the heating and/or maintenance furnace 18.

The second induction heating unit 31 can be configured to homogenize the temperature of the slab at head and tail. Following the rolling operations in the rolling unit 24, the slab may have very variable temperature gradients between its ends, which are made uniform by means of a suitable heating action by the second induction heating unit 31.

In this case too, as for the first induction heating unit 27, the second induction heating unit 31 can be provided with a plurality of heating modules controlled by suitable management and control means to manage the entity of heating of the slab.

In this case, the thin slabs that are transferred from the auxiliary rolling line 22 to the heating and/or maintenance furnace 18 can be heated by the second induction heating unit 31 to a temperature substantially equal to that of the thin slabs present in the heating and/or maintenance furnace 18 and arriving from the main casting line 11.

According to some forms of embodiment of the present invention, the first induction heating unit 27 can be configured only to raise the temperature of the thin slabs that are fed to the main rolling line 12, while the second induction heating unit 31 can be configured to homogenize the temperature of the thin slabs arriving from the rolling unit 24. The combined and synergic effect of the heating imparted by the first induction heating unit 27 and the second induction heating unit 31 allows to obtain, in the main rolling line 12, metal products with great dimensional quality and uniform mechanical properties.

According to possible formulations of the present invention, the second induction heating unit 31 can induce on the slabs a temperature that varies between the head and tail of the slabs, and obtain a constant temperature of the slabs exiting from the second induction heating unit 31.

The second induction heating unit 31 can be configured to apply a temperature gradient that grows progressively from the head of the slab to the tail.

Merely by way of example, before it is introduced into the second induction heating unit 31, the slab can have a temperature comprised between 1050°C and 1150°C. The second induction heating unit 31 is configured to raise the temperature of the slab by a value comprised between 30°C and 60°C.

According to possible implementations, the slab is made to transit in the second induction heating unit 31 at a speed comprised between 15m/min and 50m/min.

The main rolling line 12 can comprise a plurality of rolling stands configured to roll the thin slab to a desired thickness in order to obtain metal products, for example strip, possibly to be wound into coils.

With reference to the form of embodiment shown in fig. 1, the main rolling line 12 can comprise a plurality of roughing rolling stands 28 and a plurality of finishing rolling stands 29, located downstream of the roughing rolling stands 28.

Shearing means can be interposed between the roughing rolling stands 28 and the finishing rolling stands 29, for example cropping shears 30 configured to crop the heads and tails of the slabs and to facilitate their entrance into and exit from the finishing rolling stands 29.

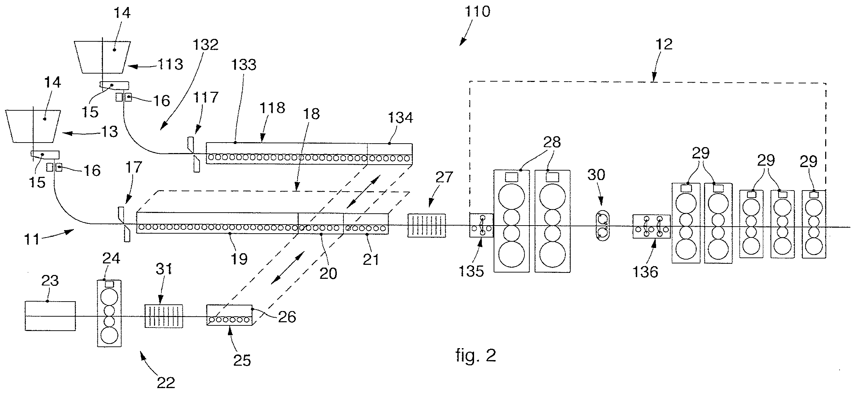

With reference to fig. 2, a possible variant is described of a plant for the production of metal products, which is indicated in its entirety by the reference number 110.

The plant 110 comprises the main casting line 11, the main rolling line 12 and the auxiliary rolling line 22 substantially as described for the plant 10 in fig. 1.

The plant 110 can also comprise a secondary casting line 132 located parallel to the main casting line 11 and so that the main casting line 11 is interposed between the secondary casting line 132 and the auxiliary rolling line 22.

According to possible forms of embodiment, the secondary casting line 132 can comprise its own casting machine 113, for example identical to the casting machine 13 in the main casting line 11.

The secondary casting line 132 can in turn comprise its own heating and/or maintenance furnace 118 in which the thin slabs cast by the casting machine 113 are kept at temperature and possibly heated.

The heating and/or maintenance furnace 118 of the secondary casting line 132 can in turn comprise a containing module 133 to temporarily contain the thin slabs, and a transfer module 134 configured to transfer the thin slabs from the heating and/or maintenance furnace 118 to the main casting line 11.

The transfer module 134 is provided with translation members, not shown in the drawings and provided to move the intermediate module 20 of the heating and/or maintenance furnace 118 laterally, and to allow the transfer module 134 to align itself with the main casting line 11, or the main rolling line 12.

In this way it is possible to feed the main rolling line 12 both with the thin slabs arriving from the main casting line 11, with the thin slabs cast by the secondary casting line 132 and also with the conventional slabs rolled in the auxiliary rolling line 22.

This allows to increase the flexibility of the plant 110, and to select, also with regard to specific processing requirements, the specific line to feed the slabs to the main rolling line 12.

According to possible implementations, the main rolling line 12 can be fed according to the sequence of thin slabs arriving from the main casting line 11, the auxiliary rolling line 22 and the secondary casting line 132.

According to possible forms of embodiment, between the casting machine 113 and the heating and/or maintenance furnace 118 a shearing device 117 can be interposed, completely identical to the shearing device 17 described above.

According to possible forms of embodiment, which can possibly be combined with the forms of embodiment described here, and for example illustrated in figs. 1 and 2, it is provided that the main rolling line 12 comprises a first descaler device using water 135, located upstream of the roughing rolling stands 28 and provided to clean from the surface of the thin slabs the scale that has formed during the time they have remained exposed to high-temperature air in the first induction heating unit 27.

According to another form of embodiment of the present invention (fig. 2), the main rolling line 12 can also comprise a second descaler device using water 136, interposed between the shears 30 and the finishing rolling stands 29 and configured to clean from the surface of the thin slabs the scale that has formed during the time they have remained exposed to high-temperature air at exit from the roughing rolling stands 28.

It is clear that modifications and/or additions of parts may be made to the plant 10, 110 and method for the production of metal products as described heretofore, without departing from the field and scope of the present invention.

It is also clear that, although the present invention has been described with reference to some specific examples, a person of skill in the art shall certainly be able to achieve many other equivalent forms of plant and method for the production of metal products, having the characteristics as set forth in the claims and hence all coming within the field of protection defined thereby.

## Claims

1. Plant for the production of metal products comprising:
- a main rolling line (12) configured to roll thin slabs;
- a main casting line (11) of thin slabs associated downstream to a heating and/or maintenance furnace (18) to heat and/or maintain the cast thin slabs at a uniform temperature, said main casting line (11) being positioned upstream of and aligned with said main rolling line (12), said main rolling line (12) being configured to roll the thin slabs arriving at least from said heating and/or maintenance furnace (18);
- an auxiliary rolling line (22) provided with at least one rolling unit (24) configured to roll conventional slabs and obtain thin slabs, and with a transfer unit (25) positioned downstream of said rolling unit (24) and configured to transfer the thin slabs rolled by the latter to said heating and/or maintenance furnace (18),
**characterized in that** said plant comprises: a first induction heating unit (27) interposed between said heating and/or maintenance furnace (18) and said main rolling line (12) and configured to heat the thin slabs arriving from said heating and/or maintenance furnace (18) with a rapid heating system, before they are sent for rolling in said main rolling line (12) **and in that** said first induction heating unit (27) is configured to apply a first heating condition on the thin slabs arriving from said main casting line (11), and a second heating condition, different from the first, on the thin slabs arriving from said auxiliary rolling line (22).

2. Plant as in claim 1, **characterized in that** said first heating condition provides a uniform heating action on the entire length of the thin slabs.

3. Plant as in claim 1 or 2, **characterized in that** said second heating condition provides a differentiated heating action between the head and tail end of the thin slabs.

4. Plant as in any claim hereinbefore, **characterized in that** said auxiliary rolling line (22) comprises a second induction heating unit (31) interposed between said rolling unit (24) and said transfer unit (25) and configured to heat the thin slabs rolled by said rolling unit (24).

5. Plant as in claim 4, **characterized in that** said second induction heating unit (31) is configured to apply on the thin slab a differentiated heating action along its longitudinal extension in order to homogenize the temperature thereof.

6. Plant as in any claim hereinbefore, **characterized in that** said transfer unit (25) is configured to deliver the rolled slabs in an intermediate zone of said heating and/or maintenance furnace (18).

7. Plant as in any claim hereinbefore, **characterized in that** it comprises a secondary casting line (132) positioned parallel to said main casting line (11), **and in that** said secondary casting line (132) comprises its own heating and/or maintenance furnace (118) provided with at least one transfer module (134) configured to transfer the thin slabs from the latter to said heating and/or maintenance furnace (18) of said main casting line (11).

8. Plant as in any claim hereinbefore, **characterized in that** said auxiliary rolling line (22) is disposed substantially parallel to the main casting line (11).

9. Method for the production of metal products that provides:
- to roll thin slabs by means of at least one main rolling line (12);
- to cast thin slabs in a main casting line (11) and subsequently to heat them and/or maintain them at a uniform temperature in a heating and/or maintenance furnace (18);
- to perform said rolling of the thin slabs contained in said heating and/or maintenance furnace (18) by means of said main rolling line (12) positioned downstream of and aligned with said main casting line (11);
- to roll conventional slabs in an auxiliary rolling line (22) by means of a rolling unit (24) in order to obtain thin slabs to be transferred, by means of a transfer unit (25), to said heating and/or maintenance furnace (18);
**characterized in that** it comprises at least a first induction heating, with a rapid heating system, of said thin slabs, by means of a first induction heating unit (27), carried out downstream of the heating and/or maintenance carried out in said heating and/or maintenance furnace (18) and before they are introduced into said main rolling line (12) **and in that** said first induction heating comprises the application of a first heating condition on the thin slabs arriving from said main casting line (11), and a second heating condition, different from the first, on the thin slabs arriving from said auxiliary rolling line (22).

10. Method as in claim 9, **characterized in that** said first heating condition provides a uniform heating action on the entire length of the thin slabs.

11. Method as in claim 9 or 10, **characterized in that** said second heating condition provides a differentiated heating action between the head and tail end of the thin slabs.

12. Method as in any claim from 9 to 11, **characterized in that** said first induction heating provides to raise the temperature of the thin slab by a value comprised between 30°C and 80°C.

13. Method as in any claim from 9 to 12, **characterized in that** it provides a second heating, by means of a second induction heating unit (31), of said thin slabs exiting from said at least one rolling unit (24), before they are introduced into said transfer unit (25).

14. Method as in claim 13, **characterized in that** said second heating provides to apply a differentiated heating along the longitudinal extension of said thin slabs in order to homogenize the temperature thereof.

## Patentansprüche

1. Anlage zur Herstellung von Metallerzeugnissen, die Folgendes umfasst:
- eine Hauptwalzlinie (12), die dafür konfiguriert ist, dünne Brammen zu walzen,
- eine Hauptgießlinie (11) von dünnen Brammen, die nachgeschaltet mit einem Erwärmungs- und/oder Erhaltungsofen (18) verknüpft ist, um die gegossenen dünnen Brammen zu erwärmen und/oder bei einer gleichförmigen Temperatur zu halten, wobei die Hauptgießlinie (11) vorgeschaltet von und ausgerichtet mit der Hauptwalzlinie (12) angeordnet ist, wobei die Hauptwalzlinie (12) dafür konfiguriert ist, die dünnen Brammen zu walzen, die wenigstens von dem Erwärmungs- und/oder Erhaltungsofen (18) kommen,
- eine Nebenwalzlinie (22), die mit wenigstens einer Walzeinheit (24), die dafür konfiguriert ist, herkömmliche Brammen zu walzen und dünne Brammen zu erhalten, und mit einer Überführungseinheit (25), die nachgeschaltet von der Walzeinheit (24) angeordnet und dafür konfiguriert ist, die dünnen Brammen, gewalzt durch letztere, zu dem Erwärmungs- und/oder Erhaltungsofen (18) zu überführen, versehen ist,
**dadurch gekennzeichnet, dass** die Anlage Folgendes umfasst: eine erste Induktionserwärmungseinheit (27), die zwischen dem Erwärmungs- und/oder Erhaltungsofen (18) und der Hauptwalzlinie (12) angeordnet und dafür konfiguriert ist, die von dem Erwärmungs- und/oder Erhaltungsofen (18) ankommenden dünnen Brammen mit einem Schnellerwärmungssystem zu erwärmen, bevor sie zum Walzen in der Hauptwalzlinie (12) geschickt werden, und dadurch, dass die erste Induktionserwärmungseinheit (27) dafür konfiguriert ist, einen ersten Erwärmungszustand auf die dünnen Brammen, die von der Hauptgießlinie (11) ankommen, und einen zweiten Erwärmungszustand, der sich von dem ersten unterscheidet, auf die dünnen Brammen, die von der Nebenwalzlinie (22) ankommen, anzuwenden.

2. Anlage nach Anspruch 1, **dadurch gekennzeichnet, dass** der erste Erwärmungszustand eine gleichförmige Erwärmungswirkung auf der gesamten Länge der dünnen Brammen bereitstellt.

3. Anlage nach Anspruch 1 oder 2, **dadurch gekennzeichnet, dass** der zweite Erwärmungszustand eine differenzierte Erwärmungswirkung zwischen dem Kopfende und dem hinteren Ende der dünnen Brammen bereitstellt.

4. Anlage nach einem der vorhergehenden Ansprüche, **dadurch gekennzeichnet, dass** die Nebenwalzlinie (22) eine zweite Induktionserwärmungseinheit (31) umfasst, die zwischen der Walzeinheit (24) und der Überführungseinheit (25) angeordnet und dafür konfiguriert ist, die durch die Walzeinheit (24) gewalzten dünnen Brammen zu erwärmen.

5. Anlage nach Anspruch 4, **dadurch gekennzeichnet, dass** die zweite Induktionserwärmungseinheit (31) dafür konfiguriert ist, auf die dünne Bramme eine differenzierte Erwärmungswirkung entlang ihrer Längenausdehnung anzuwenden, um die Temperatur derselben zu homogenisieren.

6. Anlage nach einem der vorhergehenden Ansprüche, **dadurch gekennzeichnet, dass** die Überführungseinheit (25) dafür konfiguriert ist, die gewalzten Brammen in einer Zwischenzone des Erwärmungs- und/oder Erhaltungsofens (18) zuzuführen.

7. Anlage nach einem der vorhergehenden Ansprüche, **dadurch gekennzeichnet, dass** sie eine sekundäre Gießlinie (132) umfasst, die parallel zu der Hauptgießlinie (11) angeordnet ist, und dadurch, dass die sekundäre Gießlinie (132) ihren eigenen Erwärmungs- und/oder Erhaltungsofen (118) umfasst, der mit wenigstens einem Überführungsmodul (134) versehen ist, das dafür konfiguriert ist, die dünnen Brammen von der letzteren zu dem Erwärmungs- und/oder Erhaltungsofen (18) der Hauptgießlinie (11) zu überführen.

8. Anlage nach einem der vorhergehenden Ansprüche, **dadurch gekennzeichnet, dass** die Nebenwalzlinie (22) im Wesentlichen parallel zu der Hauptgießlinie (11) angeordnet ist.

9. Verfahren zur Herstellung von Metallerzeugnissen, das Folgendes vorsieht:
- dünne Brammen mit Hilfe einer Hauptwalzlinie (12) zu walzen,
- dünne Brammen in einer Hauptgießlinie (11) zu gießen und diese anschließend in einem Erwärmungs- und/oder Erhaltungsofen (18) zu erwärmen und/oder auf einer gleichförmigen Temperatur zu halten,
- das Walzen der dünnen Brammen, die in dem Erwärmungs- und/oder Erhaltungsofen (18) enthalten sind, mit Hilfe der Hauptwalzlinie (12) durchzuführen, die nachgeschaltet von und ausgerichtet mit der Hauptgießlinie (11) angeordnet ist,
- herkömmliche Brammen in einer Nebenwalzlinie (22) mit Hilfe einer Walzeinheit (24) zu walzen, um dünne Brammen zu erhalten, die mit Hilfe einer Überführungseinheit (25) zu dem Erwärmungs- und/oder Erhaltungsofen (18) überführt werden,
**dadurch gekennzeichnet, dass** es wenigstens eine erste Induktionserwärmung mit einem Schnellerwärmungssystem, der dünnen Brammen, mit Hilfe einer ersten Induktionserwärmungseinheit (27) umfasst, die nachgeschaltet von der Erwärmung und/oder Erhaltung, die in dem Erwärmungs- und/oder Erhaltungsofen (18) durchgeführt wird, und bevor sie in die Hauptwalzlinie (12) eingeführt werden, durchgeführt wird, und dadurch, dass die erste Induktionserwärmung die Anwendung eines ersten Erwärmungszustandes auf die dünnen Brammen, die von der Hauptgießlinie (11) ankommen, und eines zweiten Erwärmungszustandes, der sich von dem ersten unterscheidet, auf die dünnen Brammen, die von der Nebenwalzlinie (22) ankommen, umfasst.

10. Verfahren nach Anspruch 9, **dadurch gekennzeichnet, dass** der erste Erwärmungszustand eine gleichförmige Erwärmungswirkung auf der gesamten Länge der dünnen Brammen bereitstellt.

11. Verfahren nach Anspruch 9 oder 10, **dadurch gekennzeichnet, dass** der zweite Erwärmungszustand eine differenzierte Erwärmungswirkung zwischen dem Kopfende und dem hinteren Ende der dünnen Brammen bereitstellt.

12. Verfahren nach einem der Ansprüche 9 bis 11, **dadurch gekennzeichnet, dass** die erste Induktionserwärmung vorsieht, die Temperatur der dünnen Bramme um einen Wert zu erhöhen, der zwischen 30°C und 80°C beträgt.

13. Verfahren nach einem der Ansprüche 9 bis 12, **dadurch gekennzeichnet, dass** es eine zweite Erwärmung, mit Hilfe einer zweiten Induktionserwärmungseinheit (31), der dünnen Brammen, die aus der wenigstens einen Walzeinheit (24) austreten, bevor sie in die Überführungseinheit (25) eingeführt werden, bereitstellt.

14. Verfahren nach Anspruch 13, **dadurch gekennzeichnet, dass** die zweite Erwärmung vorsieht, eine differenzierte Erwärmung entlang der Längenausdehnung der dünnen Brammen anzuwenden, um die Temperatur derselben zu homogenisieren.

## Revendications

1. Installation pour la production de produits métalliques, comprenant :
- une ligne de laminage principale (12) configurée pour laminer des brames minces ;
- une ligne de coulage principale (11) de brame minces associée en aval d'un four de chauffage et/ou un four de maintien (18) pour chauffer et/ou maintenir les brames minces coulées à une température uniforme, ladite ligne de coulage principale (11) étant positionnée en amont de, et alignée avec ladite ligne de laminage principale (12), ladite ligne de laminage principale (12) étant configurée pour laminer des brames minces provenant au moins dudit four de chauffage et/ou de maintien (18) ;
- une ligne de laminage auxiliaire (22) prévue avec au moins une unité de laminage (24) configurée pour laminer des brames conventionnelles et obtenir des brames minces, et avec une unité de transfert (25) positionnée en aval de ladite unité de laminage (24) et configurée pour transférer les brames minces laminées par cette dernière audit four de chauffage et/ou de maintien (18),
**caractérisée en ce que** ladite installation comprend : une unité de chauffage par induction (27) disposée entre ledit four de chauffage et/ou de maintenance (18) et ladite ligne de laminage principale (12) et configurée pour chauffer les brames minces provenant dudit four de chauffage et/ou de maintenance (18) à l'aide d'un système de chauffage rapide, avant qu'elles ne soient envoyées au laminage sur ladite ligne de laminage principale (12) **et en ce que** ladite première unité de chauffage par induction (27) est configurée pour appliquer un premier chauffage sur les brames minces provenant de ladite ligne de coulage principale (11), et un second chauffage, différent du premier, sur les brames minces provenant de ladite ligne de laminage auxiliaire (22).

2. Installation selon la revendication 1, **caractérisée en ce que** ledit premier chauffage exerce une action de chauffage uniforme sur toute la longueur des brames minces.

3. Installation selon la revendication 1 ou 2, **caractérisée en ce que** ledit second chauffage exerce une action de chauffage différentiée entre l'extrémité de tête et l'extrémité de queue des brames minces.

4. Installation selon l'une quelconque des revendications précédentes, **caractérisée en ce que** ladite ligne de laminage auxiliaire (22) comprend une seconde unité de chauffage par induction (31) disposée entre ladite unité de laminage (24) et ladite unité de transfert (25) et configurée pour chauffer les brames minces laminées par ladite unité de laminage (24).

5. Installation selon la revendication 4, **caractérisée en ce que** ladite seconde unité de chauffage par induction (31) est configurée pour appliquer sur la brame mince une action de chauffage différentiée le long de son extension longitudinale afin d'homogénéiser sa température.

6. Installation selon l'une quelconque des revendications précédentes, **caractérisée en ce que** ladite unité de transfert (25) est configurée pour livrer les brames laminées dans une zone intermédiaire dudit four de chauffage et/ou de maintien (18).

7. Installation selon l'une quelconque des revendications précédentes, **caractérisée en ce qu'**elle comprend une ligne de coulage secondaire (132) positionnée parallèlement à ladite ligne de coulage principale (11), **et en ce que** ladite ligne de coulage secondaire (132) comprend son propre four de chauffage et/ou de maintien (118) équipé d'au moins un module de transfert (134) configuré pour transférer ses brames minces audit four de chauffage et/ou de maintien (18) de ladite ligne de coulage principale (11).

8. Installation selon l'une quelconque des revendications précédentes, **caractérisée en ce que** ladite ligne de laminage auxiliaire (22) est disposée sensiblement parallèlement à la ligne de coulage principale (11).

9. Procédé de production de produits métalliques prévoyant :
- de laminer des brames minces au moyen d'au moins une ligne principale de laminage (12) ;
- de couler des brames minces dans une ligne de coulage principale (11) et ensuite de les chauffer et/ou de les maintenir à une température uniforme dans un four de chauffage et/ou de maintien (18) ;
- de réaliser ledit laminage des brames minces contenues dans ledit four de chauffage et/ou de maintien (18) au moyen de ladite ligne de laminage principale (12) positionnée en aval de, et alignée avec ladite ligne de coulage principale (11) ;
- de laminer des brames conventionnelles dans une ligne de laminage auxiliaire (22) au moyen d'une unité de laminage (24) afin d'obtenir des brames minces destinées à être transférées, au moyen d'une unité de transfert (25), audit four de chauffage et/ou de maintien (18) ;
**caractérisé en ce qu'**il comprend au moins un premier chauffage par induction, à l'aide d'un système de chauffage rapide, desdites brames minces, au moyen d'une première unité de chauffage par induction (27), effectué en aval du chauffage et/ou du maintien réalisé dans ledit four de chauffage et/ou de maintien (18) et avant qu'elles ne soient introduites sur ladite ligne de laminage principale (12) **et en ce que** ledit chauffage par induction comprend l'application d'un premier chauffage sur les brame minces provenant de ladite ligne de coulage principale (11), et un second chauffage, différent du premier, sur les brames minces provenant de ladite ligne de laminage auxiliaire (22).

10. Procédé selon la revendication 9, **caractérisé en ce que** ledit premier chauffage exerce une action de chauffage uniforme sur toute la longueur des brames minces.

11. Procédé selon la revendication 9 ou 10, **caractérisé en ce que** ledit second chauffage prévoit une action de chauffage différentiée entre les extrémités de tête et de queue des brames minces.

12. Procédé selon l'une quelconque des revendications 9 à 11, **caractérisé en ce que** ledit premier chauffage par induction prévoit d'augmenter la température de la brame mince d'une valeur comprise entre 30°C et 80°C.

13. Procédé selon l'une quelconque des revendications 9 à 12, **caractérisé en ce qu'**il prévoit un second chauffage, au moyen d'une seconde unité de chauffage par induction (31), desdits brames minces sortant de ladite ou desdites unité(s) de laminage (24), avant qu'elles ne soient introduites dans ladite unité de transfert (25).

14. Procédé selon la revendication 13, **caractérisé en ce que** ledit second chauffage prévoit d'appliquer un chauffage différentié le long de l'extension longitudinale desdites brames minces afin d'homogénéiser leur température.
